Europäisches Patentamt

European Patent Office

Office européen des brevets

(19)

(11) Publication number: **0 177 367**
**B1**

(12) **EUROPEAN PATENT SPECIFICATION**

(45) Date of publication of patent specification: **21.02.90**

(51) Int. Cl.⁵: **B 23 K 20/02**

(21) Application number: **85307135.5**

(22) Date of filing: **04.10.85**

(54) **Cold pressure welding chuck assembly.**

(30) Priority: **04.10.84 GB 8425134**

(43) Date of publication of application:
**09.04.86 Bulletin 86/15**

(45) Publication of the grant of the patent:
**21.02.90 Bulletin 90/08**

(84) Designated Contracting States:
**AT BE CH DE FR GB IT LI LU NL SE**

(56) References cited:
**GB-A-1 085 726**
**US-A-2 940 764**
**US-A-4 174 847**

(73) Proprietor: **BABCOCK WIRE EQUIPMENT LIMITED**
**Beaver Road Industrial Estate**
**Ashford Kent, TN23 1SH (GB)**

(72) Inventor: **Huxley, Stewart**
**F3 Broofield Centre Twentypence Road**
**Cottenham Cambridge CB4 4PS (GB)**
Inventor: **Vaughan, Anthony John**
**3 Kiln Close Challock**
**Near Ashford Kent (GB)**

(74) Representative: **Lewis, David Overington**
**Babcock International plc 217 Tabard Street**
**London SE1 4UR (GB)**

Courier Press, Leamington Spa, England.

## Description

This invention relates to chuck assemblies and, more particularly, to chuck assemblies for gripping a wire strand in cold pressure butt welding apparatus.

In apparatus for cold pressure butt welding of wire strand such as is described in GB—A—1 085 726 each of two wires is gripped by a retaining die or chuck and extends beyond the retaining die or chuck a sufficient distance for enabling upsetting of the wires to occur on mutual abutting end-to-end contact under high pressure and in confined conditions when the dies or chucks are closed together and in which the dies are retractable to spaced relationship leaving further portions of the wires extending therefrom, the closing and retracting steps being repeated until the requisite cold weld between the wire ends is produced. The dies or chucks are formed as two co-operating die sections having mating faces in which V-shaped grooves are formed. The die sections are reciprocable perpendicular to the mating faces to move the mating faces together and apart. When the mating faces are in abutment a square die opening is formed by the co-operating V-shaped grooves and serves to grip wire inserted into the die.

However, since the size of the V-shaped groove and the wire diameter are closely related, each set of dies will only accommodate a very restricted range of wire diameters. In addition, since the die sections separate on each stroke there is some danger that the wire will move out of axial alignment and be trapped between the mating faces of the die sections — which produces an unacceptable deformation of the wire.

US—A—4 174 847 discloses a chuck assembly suitable for precision positioning of small components including jaw pieces moveable relative to each other between a gripping position in which the component is contacted and gripped by the jaw pieces and a released position in which the component is freely moveable relative to the jaw pieces, the jaw pieces being positioned in a housing of substantially square cross-section and formed with a multiplicity of planar internal faces each having associated therewith respective jaw pieces of prismatic form of substantially isoscles triangular cross-section in planes perpendicular to the component respectively having base faces in sliding contact with the associated planar internal faces of the housing and vertices remote from said base faces forming arrises adjacent the component centrally of the housing, narrow flat facet means enabling contacting side faces of the jaw pieces adjoining the arrises to slide relative to each other toward and away from the component to move the arrises toward and away from the component in conjunction with sliding movement of the base faces relative to the internal faces of the housing in a direction parallel to tangential to the component, actuating means being provided to effect such sliding movement of the base faces and thereby move portions of the side faces adjacent the arrises of the jaw pieces between a gripping position and a released position.

By the present invention there is provided a chuck assembly for a component in the form of a wire strand in which the jaw pieces between a gripping position and a released position, characterised in that the component is a wire strand and the jaw pieces are each formed with a nose portion projecting from an end triangular face to form a continuation of the respective arris and to serve as an anvil during a cold pressure welding operation, a shoulder is provided on one of the jaw pieces adjacent the arris thereof arranged to engage the adjacent arris in the released position to retain the jaw pieces in the released position and thereby facilitate threading of the wire strand, the one jaw piece being formed with a relieved face outward of the shoulder spaced from the adjoining side face to permit lateral passage of the wire strand past the shoulder and between the relieved face and the adjoining side face when the jaw pieces are in a fully open position.

Such a chuck assembly permits of easy insertion of the wire strand and can accommodate a wide range of wire diameters and avoids imposing unacceptable deformations on the wire.

The invention will now be described, by way of example, with reference to the accompanying partly diagrammatic, drawings, in which:—

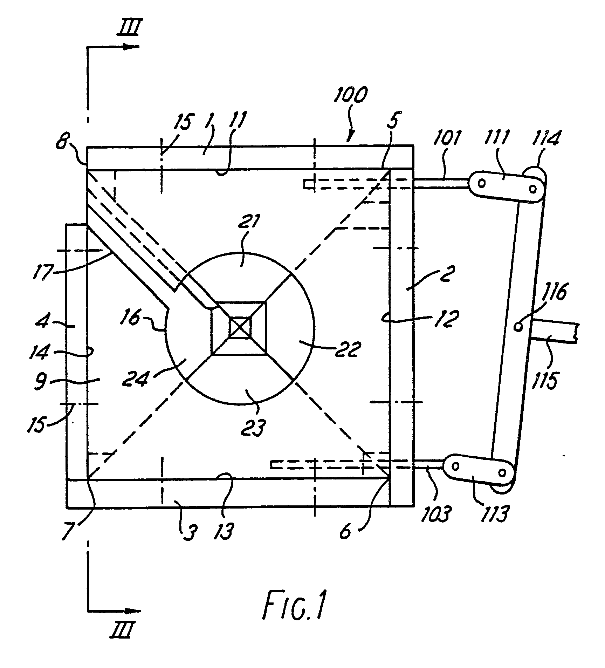

Figure 1 is a front elevation of a chuck assembly for a cold pressure butt welding machine for wire strand in a fully closed position;

Figure 2 is a front elevation of the chuck assembly with a front plate removed and in a fully open position; and

Figure 3 is a side elevation in cross-section taken on the line III—III of Figure 1.

As shown in the drawings the chuck assembly includes a housing 100 formed by first, second, third and fourth plates 1, 2, 3, 4 arranged with internal faces thereof defining a square cross-section. The first and second plates 1 and 2; second and third plates 2 and 3; third and fourth places 3 and 4 are connected perpendicularly to form respective first, second and third right angled junctions 5, 6, and 7 whilst the first and fourth plates are terminated to be spaced from a fourth corner 8 of the square cross-section. Front and rear keyhole plates 9, 10 of generally square cross-section are positioned internally of the first, second, third and fourth plates with edge faces of the keyhole plates contacting the respective internal faces 11, 12, 13, 14 of the first, second, third and fourth plates at the front and rear edges thereof. Recessed headed bolts 15 secure the first, second, third and fourth plates to the keyhole plates 9, 10 to form a rigid assembly. Each keyhole plate is formed with a central bore 16 and a slot 17 extends from the central bore to the region of the fourth corner 8 of the square cross-section to form an elongated aperture, or keyhole, in the keyhole plate.

First, second, third and fourth jaw pieces 21, 22, 23, 24 of generally right-angled isoscles triangular cross-section, having as vertices right-angled arrises 31, 32, 33, 34 and side faces 41, 51; 42, 52; 43, 53; 44, 54 corresponding to the semi-diagonals of the square cross-section of the internal faces 11, 12, 13, 14 of the housing and the base faces 61, 62, 63, 64 corresponding to the said internal faces, are also positioned internally of the housing with one set of triangular faces 71, 72, 73, 74 positioned slidably to abut the keyhole plate 9 (the other set of triangular faces abutting the keyhole plate 10) and the base edges slidably abutting the said internal faces. Each jaw piece is formed with one acute angled base arris removed to produce narrow flat facets 81, 82, 83, 84 adjacent and perpendicular to the respective base face 61, 62, 63, 64. The side face 54 of the fourth jaw piece 24 adjoining the first jaw piece 21 is cut back to form a relieved face 85 and a shoulder 86 adjacent the right angled arris 34. The first and third jaw pieces 21, 23 are each formed with threaded bores 91, 93 extending parallel to the respective base face 61, 63. Actuating rods 101, 103 are respectively threaded into each of the threaded bores 91, 93 and extend through respective apertures 110, 111 in the second plate 2 to two actuating toggles 112, 113, end portions of the second jaw piece 22 being of channel form to accommodate the rods. A yoke 114 is pinned to the toggles on the actuating rods and carries an actuating lever 115, the yoke and actuating lever being rotatable through a restricted arc about a fulcrum pin 116.

The actuating lever is connected to a moving element (not shown) moveable in a guideway associated with a solenoid such that energisation of the solenoid effects axial movement of the moving element and the actuating lever in a direction dependent upon the polarity of the energising current. By varying the distance through which the moving element may be displaced, such as by varying the position of a stop and associated air gap, the range of wire strand diameters accommodatable by the chuck assembly can be varied.

Each jaw piece 21, 22, 23, 24 is formed, on the triangular faces 71, 72, 73, 74, with a nose 121, 122, 123, 124 projecting from the respective face to beyond the outer face of the keyhole plate 9 to serve as an anvil during the cold pressure welding operation.

In operation, with the first, second, third and fourth plates 1, 2, 3, 4 of the housing bolted to the keyhole plates 9, 10 and the first, second, third and fourth jaw pieces 21, 22, 23, 24 positioned in the housing, the jaw pieces are each free to travel through a restricted distance with the base faces 61, 62, 63, 64 sliding parallel to the respective internal faces 11, 12, 13, 14. By virtue of the configuration of the jaw pieces, at one limit of travel, the four right angled arrises 31, 32, 33, 34 come into contact at the centre of the housing; at the other limit of travel the four right angled arrises are spaced apart forming a square, parallelepiped aperture 130. Movement of the jaw pieces is effected by axial movement of the actuating rods 101, 103 to urge the first and third jaw pieces in a direction parallel to the respective adjacent first and third internal faces.

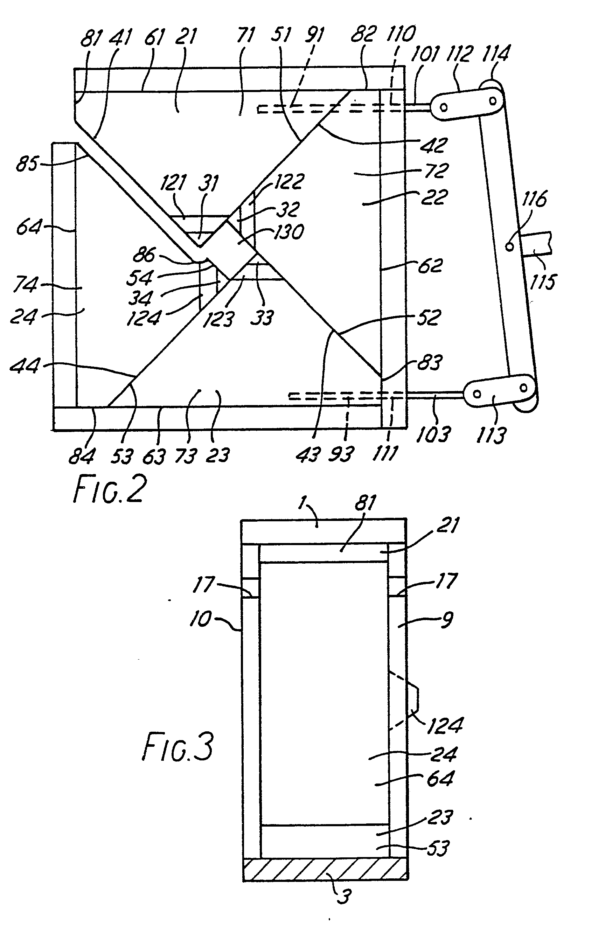

In the fully open limit position shown in Figure 2 in which the four jaw pieces form the aperture 130, an edge of the shoulder 86 on the fourth jaw piece is spaced from the right angled arris 31 on the first jaw piece. Manual introductions or removal of a wire strand can be effected in this position. Following introduction of the wire strand, the jaw pieces are moved by means of the actuating lever 115 acting through the yoke 114, the toggles 112, 113 and the actuating rods 101, 103 to slide parallel to the respective adjacent internal faces of the housing so that the right angled arrises 31, 32, 33, 34 engage and grip the wire strand. Disengagement from the wire strand — to permit axial movement as required in cold pressure butt welding — is effected by movement of the actuating lever toward the aperture forming position. At an intermediate position, the shoulder 86 engages with the right angles arris 31 on the first jaw piece to hold the jaw pieces in an open position facilitating axial threading of the wire strand.

Chuck assemblies are provided in pairs on reciprocable frames in a cold pressure welding machine with the triangular faces 71, 72, 73, 74 each formed with a nose 121, 122, 123, 124 of the two assemblies adjoining to provide anvils for the cold pressure welding operation. Fixed wire strand restraint or jambing means are positioned outwardly of the reciprocable frames and serves to restrain movement of the wire strand in a direction other than toward the associated chuck assembly. The reciprocable frames are reciprocated through cam means actuated by levers connected to a solenoid actuator. Control means are provided to effect energisation of the solenoids, to effect opening and closing of the chuck assemblies and axial reciprocation of the frames to effect cold pressure welding in a suitably synchronised sequence. It will be appreciated that, with a suitable linkage, a single solenoid may be utilised to effect opening and closing of both chuck assemblies of the pair.

After a weld has been effected, with the jaws in an intermediate position, the strand of wire may be moved laterally over the shoulder 86 and between the first and fourth jaw pieces by virtue of relieved side face 85 to effect removal of the wire strand from the chuck assembly, the slots 17 in the keyhole plates 9, 10 accommodating the lateral movement.

It will be appreciated that, whilst an arrangement with a square cross-section housing and four jaw pieces has been described, other configurations of housing may be utilised with the number of jaw pieces of triangular cross-section prismatic form equally the number of faces of the housing, provision being made to permit limited sliding movement of the base faces of the jaw pieces over the associated respective internal faces of the housing such as to permit separation of the central arrises of the jaw pieces to provide a centrally disposed opening. Sliding movement may be enabled, as has been described, by the provision of narrow flat facets adjacent the base faces of the jaw pieces. Alternatively, sliding movement in each case may be enabled by the provision of recesses at the junctions of the internal faces of the housing to accommodate the base arrises of the jaw pieces.

In each of the arrangements, in the open or released position, a tubular aperture is formed intermediate the central arrises of the jaw pieces, thereby facilitating threading of the wire strand through the chuck assembly as compared with a die arrangement in which two halves of the die separate when in an open or released position. Furthermore, the form of the tubular aperture avoids the danger of trapping or nipping the wire strand between component parts of the die assembly either during threading of the wire strand or during the cold pressure welding upset operation.

## Claims

1. A chuck assembly suitable for precision position of small components including jaw pieces (21, 22, 23, 24) moveable relative to each other between a gripping position in which the component is contacted and gripped by the jaw pieces and a released position in which the component is freely moveable relative to the jaw pieces, the jaw pieces being positioned in a housing (100) of substantially square cross-section and formed with a multiplicity of planar internal faces (11, 12, 13, 14) each having associated therewith respective jaw pieces (21, 22, 23, 24) of prismatic form of substantially isoscles triangular cross-section in planes perpendicular to the component respectively having base faces (61, 62, 63, 64) in sliding contact with the associated planar internal faces of the housing and vertices remote from said base faces forming arrises (31, 32, 33, 34) adjacent the component centrally of the housing, narrow flat facet means (81, 82, 83, 84) enabling contacting side faces (51 and 42, 52 and 43, 53 and 44, 54 and 41) of the jaw pieces adjoining the arrises (31, 32, 33, 34) to slide relative to each other toward and away from the component to move the arrises toward and away from the component in conjunction with sliding movement of the base faces relative to the internal faces of the housing in a direction parallel to tangential to the component, actuating means (101, 103) being provided to effect such sliding movement of the base faces and thereby move portions of the side faces (51, 52, 53, 54) adjacent the arrises of the jaw pieces between a gripping position and a released position, characterised in that the component is a wire strand and the jaw pieces (21, 22, 23, 24) are each formed with a nose portion (121, 122, 123, 124) projecting from an end triangular face (71, 72, 73, 74) to form a continuation of the respective arris and to serve as an anvil during a cold pressure welding operation, a shoulder (86) is provided on one (24) of the jaw pieces (21, 22, 23, 24) adjacent the arris (34) thereof arranged to engage the adjacent arris in the released position to retain the jaw pieces in the released position and thereby facilitate threading of the wire strand, the one jaw piece (24) being formed with a relieved face (85) outward of the shoulder (86) spaced from the adjoining side face (41) to permit lateral passage of the wire strand past the shoulder (86) and between the relieved face (85) and the adjoining side face (41) when the jaw pieces are in a fully open position.

2. A chuck assembly as claimed in Claim 1, characterised in that the jaw pieces (21, 22, 23, 24) are retained in the housing (100) by front and rear plates (9, 10) each formed with a central bore (16) and a communicating diagonal slot (17) registering with the relieved face (85) and adjoining side face (41) of respective adjacent jaw pieces (21, 24).

3. A chuck assembly as claimed in Claim 1 or Claim 2, characterised in that the actuating means (101, 103) are connected to two, diametrically opposed, jaw pieces (21, 23).

4. A chuck assembly as claimed in any preceding claim, characterised in that the actuating means include first and second rods (101, 103) reciprocable in a direction parallel to tangential to the wire strand and the base face of the associated jaw piece (21, 23) by means of a yoke (114) connected through toggles (112, 113) to the first and second rods, the yoke being rotatable through a restricted arc about a central fulcrum (116) by means of an actuating lever (115).

5. A chuck assembly as claimed in Claim 4, characterised in that movement of the actuating lever (115) is effected by means of a solenoid.

## Patentansprüche

1. Ein Klemmfutter für genaue Placierung kleiner Teile, mit Backen (21, 22, 23, 24) gegeneinander bewegbar, zwischen einer Halteposition in welcher das zu placierende Teil durch die Backen berührt und gehalten wird und einer offenen Position in welcher das Teil frei bewegbar gegenüber den Backen ist, und die Backen in einem Gehäuse (100) von weitgehend viereckigem Querschnitt liegen und mit einer Vielzahl Planar-Innenflächen (11, 12, 13, 14) geformt sind, die jeweils mit entsprechenden Backen (21, 22, 23, 24) verbunden sind von prismatischer Form von gleichschenkeligen dreieckigen Querschnitten in Ebenen zu rechten Winkeln zum Halteteil, mit Basenflächen (61, 62, 63, 64) in Gleitkontakt mit zugehörigen Planar-Innenflächen des Gehäuses und Scheitel abseits von den genannten Basenflächen liegende Eckvorsprünge (31, 32, 33, 34) bildend am Halteteil mittig im Gehäuse gelegen, schmale glatte Anlageflächen (81, 82, 83, 84), die es berührenden Seitenflächen (51 und 42, 52 und 43, 53 und 44, 54 und 41) der Backen bei den Eckvorsprüngen (31, 32, 33, 34) ermöglichen gegeneinander zu gleiten entweder in Richtung zu oder von dem Halteteil, um die Eckvorsprünge in Richtung zu oder von dem Haltestück zu bewegen in Verbindung mit der Gleitgewegung der Basenflächen gegenüber den Innenflächen des Gehäuses in Richtung parallel zu tangential zu dem Halteteil, und wo Betätigungsorgane (101, 103) vorgesehen sind, die solche Gleitbewegung der Basenflächen ermöglichen und dadurch Teile der Seitenflächen (51, 52, 53, 54) an den Eckvorsprüngen der Backen zwischen der Halteposition und der freien Position bewegen, dadurch gekennzeichnet, dass das Haltestück ein Draht ist und die Backen (21, 22, 23, 24) je mit einem Nasenteil (121, 122, 123, 124) versehen sind der von einem End-Dreieckteil (71, 72, 73, 74) vorspringt und so eine Fortzetzung des respektiven Eckvorsprung bildet und als Amboss während einer Kaltschweissung dient, dass eine Schulter (86) an einer der Backen (21, 22, 23, 24) nahe dem Eckvorsprung (34) gegeben ist, so dass sie den benachbarten Eckvorsprung in der freien Lage offen hält sodass der Draht eingeführt werden kann, eine Backe (24) erhält dabei eine profilierte Fläche (85) ausserhalb der Schulter (86) und so entfernt von der benachbarten Seitenfläche (41) liegt, sodass der Durchtritt des Drahtens seitlich der Schulter (86) und zwischen der profilierten Fläche (85) und der benachbarten Seitenfläche (41) ermöglicht ist, wenn die Backen sich in der voll offenen Position befinden.

2. Klemmfutter nach Anspruch 1, dadurch gekennzeichnet, dass die Backen (21, 22, 23, 24) von Vorder- und Hinterplatten (9, 10) im Gehäuse (100) gehalten werden, die je mit einer mittigen Bohrung (16) versehen sind und einem verbindenden diagonalen Schlitz (17) der in das Profil der Fläche (85) und benachbarten Seitenflächen (41) jeweiligen benachbarten Backen (21, 24) eingreift.

3. Klemmfutter nach Anspruch 1 oder 2, dadurch gekennzeichnet, dass Betätigungsorgane (101, 103) mit zwei diametrisch gegenüberliegenden Backen (21, 23) verbunden sind.

4. Klemmfutter nach einem der vorhergehenden Ansprüchen, darin gekennzeichnet, dass die Betätigungsorgane erste und zweite Stangen (101, 103) einschliessen, die hin-und-her bewegbar in Richtung parallel zu tangential zum Draht und die Basisfläche der dazugehörigen Backe (21, 23) durch einen Bügel (114) befestigt durch Knebel (112, 113) an erste und zeite Stangen ermöglichen, wobei der Bügel um einen Stützpunkt (116) mit Hilfe eines Betätigungshebels (115) durch einen Teilbogen dedreht werden kann.

5. Klemmfutter nach Anspruch 4 gekennzeichnet dadurch dass der Betätigungshebel (115) mit Hilfe eines Solenoids bewegt wird.

**Revendications**

1. Assemblage de mandrin convenant pour le positionnement prècis de petites pièces comprenant des mâchoires (21, 22, 23, 24) pouvant être déplacées les unes par rapport aux autres entre une position de serrage dans laquelle la pièce est en contact avec les mâchoires et serrée par celles-ci et une position dégagée dans laquelle la pièce peut être déplacée librement relativement aux mâchoires, les mâchoires étant positionnées dans un boîtier (100) de section transversale substantiellement carrée et composées d'une multiplicité de faces internes planes (11, 12, 13, 14) chacune étant associée aux mâchoires respectives (21, 22, 23, 24) de forme prismatique de section transversale triangulaire substantiellement isocèle en des plans perpendiculaires à la pièce respectivement comportant des faces de base (61, 62, 63, 64) en contact glissant avec les faces internes planes associées du boîtier et des sommets éloignés desdites faces de base formant des arêtes vives (31, 32, 33, 34) adjacentes à la pièce au centre du boîtierr, des facettes plates étroites (81, 82, 83, 84) permettant aux faces latérales en contact (51 et 42, 52 et 43, 53 et 44, 54 et 41) des mâchoires contiguës aux arêtes vives (31, 32, 33, 34) de glisser les unes par rapport aux autres en s'approchant et en s'éloignant de la pièce pour déplacer les arêtes vives en s'approchant et en s'éloignant de la pièce conjointement au mouvement glissant des faces de base par rapport aux faces internes du boîtier dans un sens parallèle tangent à la pièce, des moyens d'actionnement (101, 103) étant prévus pour effectuer ce mouvement glissant des faces de base et donc déplacer les portions des faces latérales (51, 52, 53, 54) adjacentes aux arêtes vives des mâchoires entre une position de serrage et une position dégagée, caractérisé en ce que la pièce est un toron et les mâchoires (21, 22, 23, 24) sont chacune dotées d'un nez (121, 122, 123, 124) se projetant à partir d'une face triangulaire d'extrémité (71, 72, 73, 74) pour former un prolongement des arêtes vives respectives et servir d'enclume pendant une opération de serrage pour un soudage à froid, un épaulement (86) est prévu sur une (24) des mâchoires (21, 22, 23, 24) adjacent à l'arête vive (34) de celle-ci disposé pour engager l'arête vive adjacente dans la position dégagée afin de retenir les mâchoires dans la position dégagée et de faciliter ainsi l'enfilage du toron, la mâchoire (24) étant dotée d'une face dépouillée (85) à l'extérieur de l'épaulement (86) espacée de la face latérale contiguë (41) afin de permettre le passage latéral du toron au-delà de l'épaulement (86) et entre la face dépouillée (85) et la face latérale contiguë (41) lorsque les mâchoires sont dans une position complètement ouverte.

2. Assemblage de mandrin selon la revendication 1, caractérisé en ce que les mâchoires (21, 22, 23, 24) sont retenues dans le boîtier (100) par des plaques avant et arrière (9, 10) dotées chacune d'un alésage central (16) et d'une fente diagonale de communication (17) coïncidant avec la face dépouillée (85) et contiguë à la face latérale (41) des mâchoires adjacentes respectives (21, 24).

3. Assemblage de mandrin selon la revendication 1 ou 2, caractérisé en ce que les moyens d'actionnement (101, 103) sont reliés à deux mâchoires (21, 23), diamétralement opposées.

4. Assemblage de mandrin selon l'une quelconque des revendications précédentes, caractérisé en ce que les moyens d'actionnement comprennent une première et une seconde tige (101, 103) à mouvement de va-et-vient dans un sens parallèle tangent au toron et à la face de base de la mâchoire associée (21, 23) au moyen d'un joug (114) relié par des barrettes (112, 113) à la première et seconde tige, le joug tournant sur un arc restreint autour d'une articulation centrale (116) au moyen d'un levier de commande (115).

5. Assemblage de mandrin selon la revendication 4, caractérisé en ce que le déplacement du levier de commande (115) est effectué au moyen d'un solénoïde.

III

100

8   15  1  11        5   101  111  114

17

21

16   24   22

4

14

9    23

15

7   3  13   6        103  113

2

12

116

115

*Fig.1*

81 41 61 21 71 51 91 82 110 101 112 114

85

64

74

24

44

121 31 122

32

130

86
54
34
124 123 33

42
72
22

62

52

83

116

115

84 53 63 73 23 43 93 111 103 113

FIG.2

1 81 21

17 17

10 9

124

24

64

23

53

FIG.3

3